# EUROPÄISCHE PATENTSCHRIFT

(11) **EP 1 262 816 B1**
(45) Veröffentlichungstag und Bekanntmachung des Hinweises auf die Patenterteilung: **05.11.2003**
(21) Anmeldenummer: 02011066.4
(22) Anmeldetag: 17.05.2002
(51) Int. Cl.: G02F 1/1335

(54) **Farbige Flüssigkristallzelle mit separater Anordnung von Farbfiltern und schwarzer Maske**
Colour LC cell with separate arrangement of colour filters and black matrix
Cellule à cristal liquide avec arrangement séparé des filtres de couleur et de la matrice noire

(30) Priorität: 25.05.2001 DE 10125673
(43) Veröffentlichungstag der Anmeldung: 04.12.2002
(73) Patentinhaber: AEG Gesellschaft für moderne Informationssysteme mbH, 89077 Ulm (DE)
(72) Erfinder: Bayrle, Reiner, Dr., 89129 Langenau (DE); Bader, Otto, 88447 Warthausen (DE); Bitter, Thomas, Dr., 73342 Bad Ditzenbach (DE)
(74) Vertreter: Winter, Brandl, Fürniss, Hübner, Röss, Kaiser, Polte Partnerschaft

(56) Entgegenhaltungen:
- EP-A- 0 735 402
- PATENT ABSTRACTS OF JAPAN vol. 016, no. 559 (P-1455), 30. November 1992 (1992-11-30) -& JP 04 212929 A (FUJITSU LTD), 4. August 1992 (1992-08-04)
- PATENT ABSTRACTS OF JAPAN vol. 1997, no. 10, 31. Oktober 1997 (1997-10-31) -& JP 09 160016 A (DENSO CORP), 20. Juni 1997 (1997-06-20)

## Beschreibung

Die Erfindung betrifft eine Zelle in einer farbigen Flüssigkristallanzeige (Liquid Crystal Display (LCD)-Zelle) gemäß dem Oberbegriff der Ansprüche 1 und 2.

Eine bekannte Zelle in einer farbigen LCD-Anzeige, beispielsweise von SHARP, umfaßt zwei parallel hintereinander angeordnete transparente Platten, zwischen denen sich ein Flüssigkristall befindet. Für jedes einzelne Bildelement der Anzeige ist an beiden Platten je eine Elektrode angeordnet. Durch Anlegen einer Spannung zwischen den beiden Elektroden wird der Flüssigkristall dazwischen für polarisiertes Licht durchlässig ("Normally-black-mode LCD") bzw. lichtundurchlässig, so daß das Bildelement bei Beleuchtung von der einen Fläche, beispielsweise durch eine Lichtquelle oder eine einfallendes Licht reflektierende Schicht, hell bzw. dunkel erscheint.

Bei Farb-LCDs nach dem Stand der Technik ist an einer der beiden Platten (erste Platte) vor jedem Bildelement an der dem Flüssigkristall zugewandten Seite (Innenfläche) eine farbfilternde Schicht angeordnet, die die Kontur des Bildelements aufweist, so daß das erleuchtet Bildelement von außen betrachtet farbig erscheint. Vorzugsweise sind dabei je drei benachbarte Bildelemente mit Farbfiltern in Primärfarben zu einem Bildpunkt zusammengefaßt.

Zwischen den Farbfiltern der einzelnen Bildelemente ist an der Innenfläche der ersten Platte eine lichtundurchlässige Schicht (schwarze Maske) angeordnet, die die Zwischenräume zwischen den Farbfiltern der einzelnen Bildelemente vollständig ausfüllt. Diese schwarze Maske ("black mask") begrenzt zum einen scharf die einzelnen Bildelemente und erhöht so den Kontrast des Gesamtbildes, zum anderen verhindert die schwarze Maske, daß bei Ansteuerung eines Bildelements auch benachbarte Bildelemente durch Streulicht teilweise mit erleuchtet werden, was zu einer Farbverfälschung führen würde.

Die Farbfilter und die schwarze Maske werden üblicherweise etwa im Flexodruckverfahren oder mittels Photolithographie auf die erste Platte aufgebracht, wobei nacheinander beispielsweise erst alle roten, dann alle grünen, dann alle blauen Farbfilter und abschließend die schwarze Maske aufgebracht werden. Dabei muß bei kleinen Pixelgrößen die schwarze Maske auf der Innenfläche der ersten Platte angeordnet sein, um unerwünschte Parallaxeffekte zu vermeiden bzw. möglichst gering zu halten.

Bei einer LCD-Zelle nach dem Stand der Technik ergeben sich dabei mehrere Nachteile: zum einen müssen alle Farbfilter sowie die schwarze Maske mit hoher Präzision, genau definierten Konturen und in genau definierten Bereichen aufgebracht werden, da sie jeweils gemeinsame Grenzflächen haben. Dies bedingt kostspielige Herstellverfahren unter Reinraumbedingungen sowie optische Qualitätseinbußen infolge Fertigungstoleranzen. Zum anderen müssen sowohl Farbfilter als auch Black-Mask-Material in hoher Reinheit verwendet werden, da beide von dem Flüssigkristall nur durch eine dünne Polyimidschicht getrennt sind und Verunreinigungen durch Ionendiffusion leicht in den Flüssigkristall übertreten würden.

Eine LCD-Zelle nach dem Oberbegriff der Ansprüche 1 und 2, bei der die schwarze Maske und die Farbfilter in einer Ebene auf einem dritten Substrat angeordnet sind, ist aus der Druckschrift JP 04 212 929 A bekannt.

Der Erfindung liegt daher die Aufgabe zugrunde, eine LCD-Zelle für farbige Flüssigkristallanzeigen zu schaffen, die bezüglich der Präzision der Farbfilter wenig sensitiv ist.

Die Aufgabe wird durch die Merkmale der Ansprüche 1 und 2 gelöst.

Eine LCD-Zelle für eine farbige Flüssigkristallanzeige nach der vorliegenden Erfindung ist gegenüber der aus der JP 04 212 929 A bekannten LCD- Zelle u.a. dadurch gekennzeichnet, daß die lichtundurchlässige Schicht und die farbfilternde Schicht in voneinander verschiedenen, zur ersten und zweiten Platte im wesentlichen parallelen Ebenen angeordnet sind.

Durch die Entkoppelung der farbfilternden und der lichtundurchlässigen Schicht weist eine erfindungsgemäße LCD-Zelle eine Reihe von Vorteilen auf:
die Farbfilter müssen nicht mehr präzise die Kontur des jeweiligen Bildelements aufweisen bzw. präzise an der Stelle des jeweiligen Bildelements angeordnet sein, da dieses von der schwarzen Maske bereits präzise begrenzt ist. Daher können die Farbfilter beispielsweise mit höherer Fertigungstoleranz und damit kostengünstiger auf einer oder mehreren Oberfläche aufgebracht werden.
die farbfilternde Schicht muß keine besondere Reinheit und/oder Materialverträglichkeit bezüglich Flüssigkristallen aufweisen, da sie nicht mehr mit dem Flüssigkristall in Berührung steht.
da die schwarze Maske grundsätzlich alleine und auf einer anderen Oberfläche als die Farbfilter aufgebracht ist, kann die schwarze Maske sehr präzise aufgebracht werden.
bei Beschädigung oder zum Wechseln der Farben der Anzeige braucht lediglich die entsprechende Ebene ausgetauscht werden.
durch die Grenzfläche zwischen der farbfilternden Schicht und der Luft erhöht sich die Reflexivität der Farbfilter vorteilhaft, die Anzeige erscheint aufgrund der stärker wechselnden Brechungsindizes heller.

In einer ersten Ausführungsform der Erfindung umfaßt die LCD-Zelle weiters eine parallel hinter der zweiten Platte angeordnete dritte transparente Platte, wobei die farbfilternde Schicht an einer Oberfläche dieser dritten Platte angeordnet ist und die lichtundurchlässige Schicht an einer der dieser Oberfläche gegenüberliegenden anderen Oberfläche der dritten Platte angeordnet ist.

In einer zweiten Ausführungsform der Erfindung umfaßt die LCD-Zelle ebenfalls eine parallel hinter der zweiten Platte angeordnete dritte transparente Platte, wobei die farbfilternde Schicht an einer Oberfläche dieser dritten Platte angeordnet ist und die lichtundurchlässige Schicht an einer vom Flüssigkristall abgewandten Oberfläche der zweiten Platte angeordnet ist.

In beiden Ausführungen der Erfindung sind die Aussparungen der lichtundurchlässigen Schicht so dimensioniert und angeordnet, daß sie jeweils Bildelemente einer bestimmten Form, etwa Bildpunkte (Pixel) oder Segmente eines alpha-numerischen Zeichensatzes scharf begrenzen, so daß die einzelnen Bildelemente nicht nur durch die ansteuernden Elektroden, sondern genauer durch die schwarze Maske begrenzt sind.

In einer weiteren vorteilhaften Ausführung der Erfindung weist die farbfilternde Schicht verschiedenen Bereiche aus verschiedenen Materialien auf, die jeweils Licht einer bestimmten Farbe durchlassen, vorzugsweise etwa der Farben Rot, Grün und Blau. Dabei weist in einer weiteren vorteilhaften Ausführung jeder Bereich jeweils wenigstens die Fläche einer Aussparung der lichtundurchlässigen Schicht auf und ist so angeordnet ist, daß er diese Aussparung in Blickrichtung der Flüssigkristallanzeige überdeckt. Somit sind verschiedenfarbige Bildelemente vorhanden, wobei vorteilhafterweise jeweils drei benachbarte Bildelemente Primärfarben aufweisen.

In weiteren vorteilhaften Ausführungen der Erfindung sind zwischen der zweiten Platte und der dritten Platte Abstandhalter angeordnet. Hinter der zweiten Platte, beispielsweise in dem so geschaffenem Hohlraum, ist eine Folie zur Verbesserung der optischen Eigenschaften ("Enhancement-Folie") angeordnet, die etwa die Leuchtdichte, die Richtungscharakteristik und/oder die Farbsättigung verbessert.

In einer weiteren vorteilhaften Ausführung der Erfindung ist hinter der zweiten bzw. dritten Platte eine Beleuchtungsquelle und/oder eine zumindest teilweise reflektierende Schicht angeordnet, die Licht in Blickrichtung der Flüssigkristallanzeige ausstrahlt bzw. reflektiert.

Schließlich können mehrere farbfilternde Schichten, vorzugsweise aus unterschiedlichen Materialien, in verschiedenen im wesentlichen parallelen Ebenen angeordnet sein, die vorzugsweise nur Licht jeweils eines bestimmten Wellenlängebereichs durchlassen.

Weitere Vorteile, Merkmale und Ausführungen ergeben sich aus den Unteransprüchen und den Zeichnungen, in denen:
Fig. 1 einen Querschnitt einer LCD-Zelle nach einer ersten Ausführung der Erfindung zeigt;
Fig. 2 einen Querschnitt einer LCD-Zelle nach einer zweiten Ausführung der Erfindung zeigt;

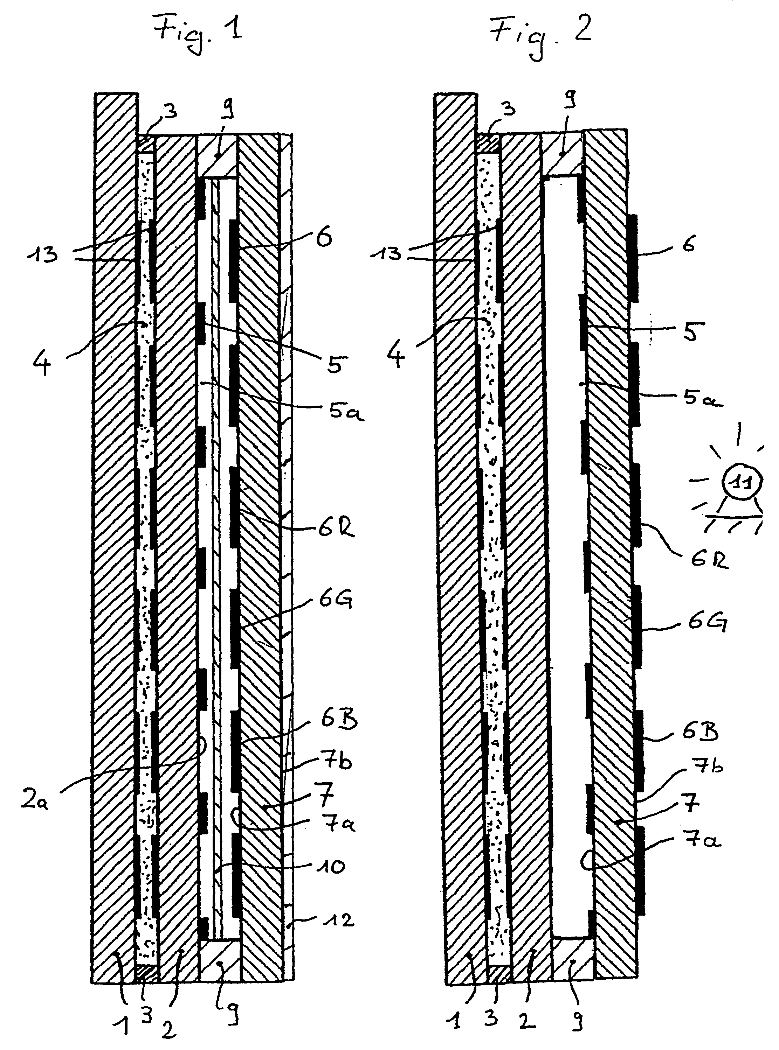

In Figur 1 umfaßt eine LCD-Zelle nach einer ersten Ausführung der vorliegenden Erfindung eine erste transparente Platte 1, eine parallel dahinter angeordnete zweite transparente Platte 2, eine zwischen der ersten Platte 1 und der zweiten Platte 2 am Umfang der zweiten Platte angeordnete Abdichteinrichtung 3, einen zwischen der ersten Platte 1 und der zweiten Platte 2 angeordneten Flüssigkristall 4, eine dritte parallel hinter der zweiten Platte 2 angeordnete transparente Platte 7, eine farbfilternde Schicht 6 aus Materialien, die nur Licht bestimmter Wellenlängenbereiche durchlassen und die an einer Oberfläche 7a der dritten Platte 7 angeordnet ist und eine lichtundurchlässige Schicht 5 aus lichtdämpfendem, vorzugsweise lichtundurchlässigem Material, die Aussparungen 5a aufweist und die an einer Oberfläche 2a der zweiten Platte 2 angeordnet ist.

Die Aussparungen 5a der lichtundurchlässigen Schicht 5 sind so dimensioniert und angeordnet, daß sie jeweils Bildelemente einer bestimmten Form begrenzen.

Zu jedem Bildelement sind an den dem Flüssigkristall zugewandten Oberflächen der ersten bzw. zweiten Platte (1, 2) Elektroden (13) zur Ansteuerung des Flüssigkristalls in diesem Bereich angeordnet.

Die farbfilternde Schicht 6 weist verschiedene Bereiche 6R, 6G, 6B aus verschiedenen Materialien auf, die jeweils Licht einer bestimmten Farbe durchlassen, vorzugsweise der Farben Rot, Grün und Blau. Dabei weist jeder Bereich 6R, 6G bzw. 6B der farbfilternden Schicht 6 jeweils die Fläche einer Aussparung 5a auf und ist so auf der dritten Platte 7 angeordnet, daß er diese Aussparung 5a in Blickrichtung der Flüssigkristallanzeige zur Gänze überdeckt.

Zwischen der zweiten Platte 2 und der dritten Platte 7 sind Abstandhalter 9 angeordnet. Zwischen der zweiten Platte 2 und der dritten Platte 7 ist eine Folie 10 zur Verbesserung der optischen Eigenschaften angeordnet.

Hinter der dritten Platte 7 ist eine zumindest teilweise reflektierende (transflektive) Schicht 12 (Transflektor) angeordnet, die einfallendes Licht in Blickrichtung der Flüssigkristallanzeige zumindest teilweise reflektiert.

Eine LCD-Zelle nach einer zweiten Ausführung der vorliegenden Erfindung ist in Figur 2 dargestellt und gleicht der ersten Ausführung im wesentlichen. Im Unterschied zur ersten Ausführung ist hier die farbfilternde Schicht 6 an einer vom Flüssigkristall 4 abgewandten Oberfläche 7b der dritten Platte 7 angeordnet, während die lichtundurchlässige Schicht 5 aus lichtdämpfendem, vorzugsweise lichtundurchlässigem Material, die Aussparungen 5a aufweist, an einer dieser Oberfläche 7b gegenüberliegenden anderen Oberfläche 7a der dritten Platte 7 angeordnet ist.

Die Aussparungen 5a der lichtundurchlässigen Schicht 5 sind wiederum so dimensioniert und angeordnet, daß sie jeweils Bildelemente einer bestimmten Form begrenzen.

Die farbfilternde Schicht 6 weist verschiedenen Bereiche 6R, 6G, 6B aus verschiedenen Materialien auf, die jeweils Licht einer bestimmten Farbe durchlassen, vorzugsweise der Farben Rot, Grün und Blau. Dabei weist jeder Bereich 6R, 6G bzw. 6B der farbfilternden Schicht 6 jeweils eine Fläche auf, die geringfügig größer als die Fläche einer Aussparung 5a ist und ist so auf der dritten Platte 7 angeordnet, daß er diese Aussparung 5a in Blickrichtung der Flüssigkristallanzeige zur Gänze überdeckt.

Zwischen der zweiten Platte 2 und der dritten Platte 7 sind Abstandhalter 9 angeordnet.

Hinter der dritten Platte 7 ist eine Beleuchtungsquelle 11 angeordnet ist, die Licht in Blickrichtung der Flüssigkristallanzeige ausstrahlt. Zwischen dritter Platte 7 und Beleuchtungsquelle 11 kann wiederum eine teilweise lichtdurchlässige (transmissive) und teilweise reflektierende (transflektive) Schicht 12 angeordnet sein (nicht dargestellt).

Zur Beleuchtung der LCD-Anzeige stehen somit prinzipiell drei Möglichkeiten zur Verfügung: entweder wird von vorne einfallendes Licht durch eine hinter der LCD-Anzeige angeordnete transflektive Schicht 12 zumindest teilweise reflektiert, oder die LCD-Anzeige wird durch eine Beleuchtungsquelle 11 von hinten angestrahlt, oder diese beiden Varianten sind kombiniert, indem eine zwischen dritter Platte 7 und Beleuchtungsquelle 11 angeordnete teilweise transmissive, teilweise transflektive Schicht 12 (Transflektor) das von vorne einfallende Umgebungslicht zumindest teilweise reflektiert und das von der Belichtungsquelle 11 ausgestrahlte Licht zumindest teilweise in Richtung zur LCD-Anzeige durchläßt. Hierdurch kann beispielsweise der Helligkeitsgrad der Anzeige eingestellt sein.

### Bezugszeichenliste:

- 1: erste Platte
- 2: zweite Platte
- 3: Abdichteinrichtung
- 4: Flüssigkristall
- 5: lichtundurchlässige Schicht
- 5a: Aussparungen
- 6: farbfilternde Schicht
- 6R, 6G, 6B: farbfilternde Schicht aus verschiedenen Materialien
- 7: dritte Platte
- 7a: erste Oberfläche der dritten Platte
- 7b: zweite Oberfläche der dritten Platte
- 9: Abstandhalter
- 10: Farbverbesserungsfolie
- 11: Beleuchtungseinrichtung
- 12: Transflektor
- 13: Elektroden

## Patentansprüche

1. Flüssigkristallanzeige mit
einer ersten transparenten Platte (1),
einer parallel dahinter angeordneten zweiten transparenten Platte (2),
einer parallel hinter der zweiten Platte (2) angeordneten dritten transparenten Platte (7),
einem zwischen der ersten Platte (1) und der zweiten Platte (2) angeordneten Flüssigkristall (4),
einer zwischen der ersten Platte (1) und der zweiten Platte (2) angeordneten, den Flüssigkristall (4) einschließenden Abdichteinrichtung (3),
einer lichtundurchlässigen Schicht (5) aus lichtdämpfendem, vorzugsweise lichtundurchlässigem Material, die Aussparungen (5a) aufweist, wenigstens einer farbfilternden Schicht (6) aus wenigstens einem Material, das nur Licht jeweils eines bestimmten Wellenlängenbereichs durchläßt,
wobei die lichtundurchlässige Schicht (5) und die wenigstens eine farbfilternde Schicht (6) außerhalb des durch die erste und zweite Platte (1, 2) und die Abdichteinrichtung (3) begrenzten Raumes angeordnet sind,
**dadurch gekennzeichnet,**
**daß** die lichtundurchlässige Schicht (5) und die wenigstens eine farbfilternde Schicht (6) in voneinander verschiedenen, zur ersten und zweiten Platte (1, 2) im wesentlichen parallelen Ebenen angeordnet sind,
und **daß** die wenigstens eine farbfilternde Schicht (6) an einer Oberfläche (7a; 7b) der dritten Platte (7) angeordnet ist und die lichtundurchlässige Schicht (5) an der besagter Oberfläche (7a; 7b) gegenüberliegenden anderen Oberfläche (7b; 7a) der dritten Platte (7) angeordnet ist,
und **daß** die Aussparungen (5a) der lichtundurchlässigen Schicht (5) so dimensioniert und angeordnet sind, daß sie jeweils Bildelemente einer bestimmten Form begrenzen.

2. Flüssigkristallanzeige mit
einer ersten transparenten Platte (1),
einer parallel dahinter angeordneten zweiten transparenten Platte (2),
einer parallel hinter der zweiten Platte (2) angeordneten dritten transparenten Platte (7),
einem zwischen der ersten Platte (1) und der zweiten Platte (2) angeordneten Flüssigkristall (4),
einer zwischen der ersten Platte (1) und der zweiten Platte (2) angeordneten, den Flüssigkristall (4) einschließenden Abdichteinrichtung (3),
einer lichtundurchlässigen Schicht (5) aus lichtdämpfendem, vorzugsweise lichtundurchlässigem Material die Aussparungen (5a) aufweist, wenigstens einer farbfilternden Schicht (6) aus wenigstens einem Material, das nur Licht jeweils eines bestimmten Wellenlängenbereichs durchläßt,
wobei die lichtundurchlässige Schicht (5) und die wenigstens eine farbfilternde Schicht (6) außerhalb des durch die erste und zweite Platte (1, 2) und die Abdichteinrichtung (3) begrenzten Raumes angeordnet sind,
**dadurch gekennzeichnet,**
**daß** die lichtundurchlässige Schicht (5) und die wenigstens eine farbfilternde Schicht (6) in voneinander verschiedenen, zur ersten und zweiten Platte (1, 2) im wesentlichen parallelen Ebenen angeordnet sind,
und **daß** die wenigstens eine farbfilternde Schicht (6) an einer Oberfläche (7a; 7b) der dritten Platte (7) angeordnet ist und die lichtundurchlässige Schicht (5) an der vom Flüssigkristall (4) abgewandten Oberfläche (2a) der zweiten Platte (2) angeordnet ist,
und **daß** die Aussparungen (5a) der lichtundurchlässigen Schicht (5) so dimensioniert und angeordnet sind, daß sie jeweils Bildelemente einer bestimmten Form begrenzen.

3. Flüssigkristallanzeige nach wenigstens einem der vorangegangenen Ansprüche, **dadurch gekennzeichnet, daß** die farbfilternde Schicht (6) verschiedene Bereiche (6R, 6G, 6B) aus verschiedenen Materialien aufweist, die jeweils Licht einer bestimmten Farbe durchlassen, vorzugsweise der Farben Rot, Grün und Blau.

4. Flüssigkristallanzeige nach Anspruch 3, **dadurch gekennzeichnet, daß** jeder Bereich (6R, 6G, 6B) der farbfilternden Schicht (6) jeweils wenigstens die Fläche einer Aussparung (5a) der lichtundurchlässigen Schicht (5) aufweist und so angeordnet ist, daß er diese Aussparung (5a) in Blickrichtung der Flüssigkristallanzeige überdeckt.

5. Flüssigkristallanzeige nach wenigstens einem der vorangegangenen Ansprüche, **dadurch gekennzeichnet, daß** zwischen der zweiten Platte (2) und der dritten Platte (7) Abstandhalter (9) angeordnet sind.

6. Flüssigkristallanzeige nach wenigstens einem der vorangegangenen Ansprüche, **dadurch gekennzeichnet, daß** hinter der zweiten Platte (2) eine Folie (10) zur Verbesserung der optischen Eigenschaften vorzugsweise der Leuchtdichte, Richtungscharakteristik, und/oder Farbsättigung, der Anzeige angeordnet ist.

7. Flüssigkristallanzeige nach wenigstens einem der vorangegangenen Ansprüche, **dadurch gekennzeichnet, daß** hinter der zweiten oder dritten Platte (2; 7) eine Beleuchtungsguelle (11) angeordnet ist, die Licht in Blickrichtung der Flüssigkristallanzeige ausstrahlt.

8. Flüssigkristallanzeige nach wenigstens einem der vorangegangenen Ansprüche, **dadurch gekennzeichnet, daß** hinter der zweiten oder dritten Platte (2; 7) eine zumindest teilweise reflektierende Schicht (12) angeordnet ist, die einfallendes Licht in Blickrichtung der Flüssigkristallanzeige zumindest teilweise reflektiert.

## Claims

1. A liquid crystal display with
a first transparent plate (1),
a second transparent plate (2) placed behind plate (1) and parallel thereto,
a third transparent plate (7) placed behind the second plate (2) and parallel thereto,
a liquid crystal (4) placed between the first plate (1) and the second plate (2),
sealing means (3) placed between the first plate (1) and the second plate (2) for peripherally sealing the liquid crystal (4),
an opaque layer (5) of a light-damping, preferably an opaque material, which exhibits openings (5a),
at least one color filtering layer (6) of at least one material which only transmits light in a defined wavelength band,
wherein the opaque layer (5) and the at least one color filtering layer (6) are disposed externally of the space defined by the first and second plates (1, 2) and the sealing means (3),
**characterized in that**
the opaque layer (5) and the at least one color filtering layer (6) are placed in planes which are different from one another and essentially parallel with the first and second plates (1, 2),
and the at least one color filtering layer (6) is disposed on a surface (7a; 7b) of the third plate (7), and the opaque layer (5) is disposed on the other surface (7b; 7a) of the third plate (7) opposite from the said surface (7a; 7b),
and the openings (5a) of the opaque layer (5) are so dimensioned and located that they respectively delimit image elements of a particular shape.

2. A liquid crystal display with
a first transparent plate (1),
a second transparent plate (2) placed behind plate (1) and parallel thereto,
a third transparent plate (7) placed behind the second plate (2) and parallel thereto,
a liquid crystal (4) placed between the first plate (1) and the second plate (2),
sealing means (3) placed between the first plate (1) and the second plate (2) for peripherally sealing the liquid crystal (4),
an opaque layer (5) of a light-damping, preferably an opaque material, which exhibits openings (5a),
at least one color filtering layer (6) of at least one material which only transmits light in a defined wavelength band,
wherein the opaque layer (5) and the at least one color filtering layer (6) are disposed externally of the space defined by the first and second plates (1, 2) and the sealing means (3),
**characterized in that**
the opaque layer (5) and the at least one color filtering layer (6) are placed in planes which are different from one another and essentially parallel with the first and second plates (1, 2),
and the at least one color filtering layer (6) is disposed on a surface (7a; 7b) of the third plate (7), and the opaque layer (5) is disposed on the surface (2a) of the second plate (2) facing away from the liquid crystal (4),
and the openings (5a) of the opaque layer (5) are so dimensioned and located that they respectively delimit image elements of a particular shape.

3. A liquid crystal display in accordance with at least one of the preceding claims, **characterized in that** the color filtering layer (6) includes different zones (6R, 6G, 6B) of various materials, which respectively transmit light of a particular color, preferably the colors red, green and blue.

4. A liquid crystal display in accordance with claim 3, **characterized in that** each zone (6R, 6G, 6B) of the color filtering layer (6) respectively has at least the area of an opening (5a) of the opaque layer (5), and is located so as to cover this opening (5a) in the line of view of the liquid crystal display.

5. A liquid crystal display in accordance with at least one of the preceding claims, **characterized in that** spacers (9) are positioned between the second plate (2) and the third plate (7).

6. A liquid crystal display in accordance with at least one of the preceding claims, **characterized in that** a film (10) for improving the optical characteristics, preferably the brightness, directivity and/or color saturation of the display is disposed behind the second plate (2).

7. A liquid crystal display in accordance with at least one of the preceding claims, **characterized in that** an illumination source (11) for emitting light in the direction of the line of view of the liquid crystal display is disposed behind the second or third plate (2; 7) .

8. A liquid crystal display in accordance with at least one of the preceding claims, **characterized in that** behind the second or third plate (2; 7) an at least partially reflective layer (12) is disposed which at least partially reflects incident light in the direction of the line of view of the liquid crystal display.

## Revendications

1. Affichage à cristaux liquides comprenant
une première plaque transparente (1),
une deuxième plaque transparente (2) placée parallèlement derrière celle-ci,
une troisième plaque transparente (7) placée parallèlement derrière la deuxième plaque (2),
un cristal liquide (4) situé entre la première plaque (1 ) et la deuxième plaque (2),
un dispositif d'étanchéité (3) contenant le cristal liquide (4) situé entre la première plaque (1) et la deuxième plaque (2),
une couche opaque (5) en un matériau qui absorbe la lumière, préférentiellement opaque, comportant des évidements (5a), au moins une couche filtrant la couleur (6) en au moins un matériau qui ne laisse passer que la lumière respectivement d'une certaine gamme de longueur d'ondes, la couche opaque (5) et ladite au moins une couche filtrant la couleur (6) étant disposées à l'extérieur de l'espace limité par la première et la deuxième plaque (1, 2) et le dispositif d'étanchéité (3),
**caractérisé en ce que**,
la couche opaque (5) et ladite au moins une couche filtrant la couleur (6) sont disposées dans des plans différents les uns des autres, et essentiellement parallèles à la première et la deuxième plaque (1, 2),
et ladite au moins une couche filtrant la couleur (6) est disposée sur une surface (7a ; 7b) de la troisième plaque (7) et la couche opaque (5) est disposée sur l'autre surface (7b ; 7a) de la troisième plaque (7), opposée à ladite surface (7a ; 7b),
et les évidements (5a) de la couche opaque (5) sont dimensionnés et disposés de telle sorte qu'ils délimitent respectivement des éléments d'image d'une forme déterminée.

2. Affichage à cristaux liquides comprenant
une première plaque transparente (1),
une deuxième plaque transparente (2) placée parallèlement derrière celle-ci,
une troisième plaque transparente (7) placée parallèlement derrière la deuxième plaque (2),
un cristal liquide (4) situé entre la première plaque (1) et la deuxième plaque (2),
un dispositif d'étanchéité (3) contenant le cristal liquide (4) situé entre la première plaque (1) et la deuxième plaque (2),
une couche opaque (5) en un matériau qui absorbe la lumière, préférentiellement opaque, comportant des évidements (5a), au moins une couche filtrant la couleur (6) en au moins un matériau qui ne laisse passer que la lumière respectivement d'une certaine gamme de longueur d'ondes, la couche opaque (5) et ladite au moins une couche filtrant la couleur (6) étant disposées à l'extérieur de l'espace limité par la première et la deuxième plaque (1, 2) et le dispositif d'étanchéité (3),
**caractérisé en ce que**,
la couche opaque (5) et ladite au moins une couche filtrant la couleur (6) sont disposées dans des plans différents les uns des autres, et essentiellement parallèles à la première et la deuxième plaque (1, 2),
et ladite au moins une couche filtrant la couleur (6) est disposée sur une surface (7a ; 7b) de la troisième plaque (7) et la couche opaque (5) est disposée sur la surface (2a) opposée au cristal liquide (4) de la deuxième plaque (2),
et les évidements (5a) de la couche opaque (5) sont dimensionnés et disposés de telle sorte qu'ils délimitent respectivement des éléments d'image d'une forme déterminées.

3. Affichage à cristaux liquides selon au moins l'une quelconque des revendications précédentes, **caractérisé en ce que** la couche filtrant la couleur (6) comprend différentes zones (6R, 6G, 6B) composées de différents matériaux qui laissent passer respectivement la lumière d'une certaine couleur, préférentiellement les couleurs rouge, vert et bleu.

4. Affichage à cristaux liquides selon la revendication 3, **caractérisé en ce que** chaque zone (6R, 6G, 6B) de la couche filtrant la couleur (6) présente respectivement au moins la surface d'un évidement (5a) de la couche opaque (5) et est disposée de telle sorte qu'elle recouvre cet évidement (5a) dans la direction de visée de l'affichage à cristaux liquides.

5. Affichage à cristaux liquides selon au moins une des revendications précédentes, **caractérisé en ce que** des écarteurs (9) sont disposés entre la deuxième plaque (2) et la troisième plaque (7).

6. Affichage à cristaux liquides selon au moins une des revendications précédentes, **caractérisé en ce qu'**une feuille (10) est située derrière la deuxième plaque (2) pour améliorer les propriétés optiques de l'affichage, préférentiellement la luminance, la caractéristique de direction, et/ou la saturation de couleur.

7. Affichage à cristaux liquides selon au moins une des revendications précédentes, **caractérisé en ce qu'**une source d'éclairage (11), qui émet de la lumière dans la direction de visée de l'affichage à cristaux liquides, est située derrière la deuxième ou la troisième plaque (2 ; 7).

8. Affichage à cristaux liquides selon au moins une des revendications précédentes, **caractérisé en ce qu'**une couche au moins partiellement réfléchissante (12), qui réfléchit au moins partiellement la lumière incidente dans la direction de visée de l'affichage à cristaux liquides, est située derrière la deuxième ou la troisième plaque (2 ; 7).
